# EUROPEAN PATENT SPECIFICATION

(11) **EP 4 516 548 B1**
(45) Date of publication and mention of the grant of the patent: **25.11.2026**
(21) Application number: 24193373.8
(22) Date of filing: 07.08.2024
(51) Int. Cl.: B60K 1/04, B60K 1/00

(54) **ELECTRIC VEHICLE**
ELEKTROFAHRZEUG
VÉHICULE ÉLECTRIQUE

(30) Priority: 18.08.2023 JP 2023133495
(43) Date of publication of application: 05.03.2025
(73) Proprietor: Kubota Corporation, Osaka-shi, Osaka 530-0011 (JP)
(72) Inventor: BESSHO, Hiroki, SAKAI-SHI, OSAKA, 5900908 (JP)
(74) Representative: Cabinet Beau de Loménie

(56) References cited:
- EP-A1- 4 119 374
- WO-A1-2023/127077
- US-A1- 2020 247 226

## Description

### Technical Field

The present invention relates to an electric vehicle configured to travel as driven by an electric motor operable with electric power from batteries.

### Background Art

Electrically operated utility vehicles travel as driven by an electric motor operable with electric power from a battery. Such a battery, as disclosed in Patent Literature 1, typically lies laterally under a seat. Utility vehicles (that is, electric vehicles) are required to include a battery with a large charging capacity, that is, a large-sized battery, for an extended travelable distance.

Patent Literature 2 discloses an electric car having a battery with battery units arranged side by side in the left-right direction with electric modules of the electric motor in between, the electric motor overall height corresponding to the battery overall height.

### Citation List

Patent Literature 1
   JP 2018-154191 A
Patent Literature 2
   US 2020/247226

### Summary of Invention

### Technical Problem

Utility vehicles include axles extending in the front-back direction of the body, which makes it difficult to orient a large-sized battery laterally under a seat. Spreading battery cells on the floor may be an option, but will more likely let the battery be damaged, as utility vehicles may travel on rough terrain.

The present invention has an object of providing an electric vehicle including efficiently positioned large-capacity batteries.

### Solution to Problem

In order to attain the above object, an electric vehicle as an embodiment of the present invention is defined in claim 1. The vehicle includes: a body; an electric motor; a front wheel and a rear wheel each drivable by motive power from the electric motor; and a plurality of batteries each configured to feed electric power to the electric motor, the plurality of batteries including at least two batteries arranged side by side in the left-right direction with the electric motor in between.

Electric vehicles are required to include a battery with a large charging capacity for an extended travelable distance. A battery with a large charging capacity needs to be physically large. The vehicle body is, however, provided with a large number of components such as an electric motor and axles other than a battery. This makes it difficult to mount a large battery in the body.

The above configuration involves a plurality of batteries that are not large to constitute a battery system with an increased charging capacity. The batteries, which are not large, may be positioned efficiently in the body, meaning that a battery system with a large charging capacity may be mounted efficiently in the body.

An electric motor, which supplies motive power in the front-back direction of the body, is usually in or near a laterally central area of the body. Further, an electric motor is relatively large.

The above configuration ensures a space for an electric motor and allows the electric motor to be positioned appropriately. The above configuration also allows batteries to be disposed in an area where the electric motor is absent, meaning that a battery system with a large charging capacity may be mounted efficiently in the body.

The electric vehicle may be further configured such that the at least two batteries are symmetrical to each other with respect to a direction in which the electric vehicle travels.

An electric motor, which supplies motive power in the front-back direction of the body, is usually in or near a laterally central area of the body. Further, an electric motor is relatively large.

The above configuration allows the electric motor to be positioned suitably and allows the batteries to be disposed in the body in a balanced manner, meaning that a battery system with a large charging capacity may be mounted efficiently in the body.

The electric vehicle may be further configured such that the at least two batteries are of an identical model.

Arranging two batteries in the body symmetrically to each other as above allows the weight balance of the body to be suitable.

The electric vehicle may further include: a front axle extending forward from the electric motor and configured to transmit the motive power from the electric motor to the front wheel; and a rear axle extending backward from the electric motor and configured to transmit the motive power from the electric motor to the rear wheel, wherein at least either the front axle or the rear axle is between the at least two batteries.

The above configuration ensures a space for the axles, which extend in the front-back direction of the body, and allows the batteries to be positioned efficiently, meaning that a battery system with a large charging capacity may be mounted efficiently in the body.

The electric vehicle is configured such that the at least two batteries are oblique such that respective portions further backward relative to the body are closer to each other.

Rear wheels, which are at a back portion of the body, may laterally narrow and limit a space for a battery at a back portion of the body. The above configuration positions the batteries across the electric motor and orients the batteries obliquely such that they are in an area where the electric motor is absent and that their respective portions backward relative to the body, where the available space is small, are close to each other. This allows use of long batteries and also allows two batteries to be positioned efficiently, meaning that a battery system with a large charging capacity may be mounted efficiently in the body.

The electric vehicle is configured such that in a front view, the at least two batteries have respective front end portions apart from the electric motor and respective back end portions overlapping with the electric motor.

The above configuration allows two batteries to be positioned efficiently in an area where the electric motor is absent.

The electric vehicle may be further configured such that the electric motor is within an area of the at least two batteries in a side view.

The above configuration allows the batteries to be laterally outward of the electric motor and positioned at the same height as the electric motor. This reduces a space for the batteries and the electric motor in the height direction, and allows the batteries and the electric motor to be mounted efficiently in the body.

The electric vehicle may further include: a driver's seat for an occupant to sit on, wherein the at least two batteries have respective back end portions backward of a back end portion of the driver's seat in a plan view.

The above configuration allows the batteries, which extend backward from under the seat, to be positioned efficiently.

The electric vehicle is configured such that the at least two batteries have respective back end portions overlapping with the rear wheel in a side view.

The above configuration allows batteries with a large front-back dimension to be mounted.

The electric vehicle is configured such that the at least two batteries each have a rectangular parallelepiped outer shape.

The above configuration allows general-purpose batteries to constitute a battery system.

### Brief Description of Drawings

Fig. 1 is a left side view of a utility vehicle.
Fig. 2 is a plan view of main components of a utility vehicle to illustrate how batteries are arranged.
Fig. 3 is a side view of main components of a utility vehicle to illustrate how batteries are arranged.

### Description of Embodiments

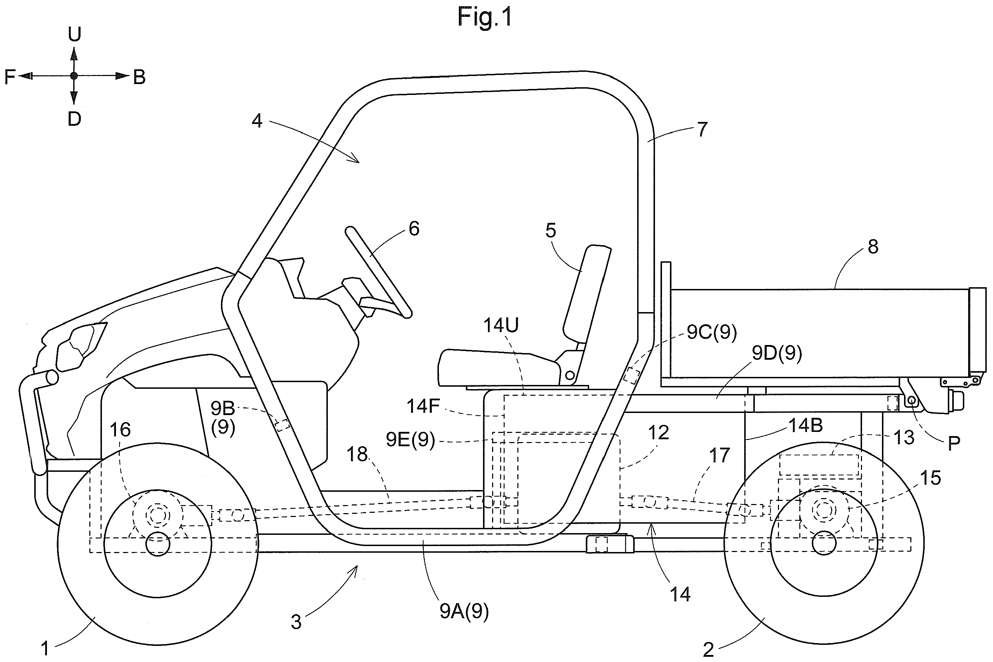

The description below deals with a utility vehicle as an example of the electric vehicle of the present invention with reference to drawings. The description below refers to Fig. 1, which shows arrow F to indicate the forward side of the body, arrow B to indicate the backward side of the body, arrow U to indicate the upward side of the body, and arrow D to indicate the downward side of the body. The front side of Fig. 1 corresponds to the leftward side of the body, whereas the back side of Fig. 1 corresponds to the rightward side of the body. The left-right direction of the body corresponds to the width direction of the body.

### Overall Configuration of Utility Vehicle

Fig. 1 illustrates a utility vehicle for multiple purposes such as cargo transport and recreation. The utility vehicle includes a pair of left and right front wheels 1 as a travel device, a pair of left and right rear wheels 2 as a travel device, and a body 3 provided with the front and rear wheels 1 and 2. The front wheels 1 are turnable and drivable, whereas the rear wheels 2 are drivable.

The utility vehicle includes a driver section 4 disposed at a front portion of the body 3 and configured to accommodate an occupant such as a driver. The utility vehicle includes in the driver section 4 a driver's seat 5 for an occupant to sit on, a steering wheel 6 for use to change the direction of the front wheels 1, and a roll-over protective structure (ROPS) 7 that defines a driver space.

The utility vehicle includes a cargo box 8 backward of the driver section 4 and a body frame 9 holding the cargo box 8. The cargo box 8 is swingable up and down about a coupling axis P for the cargo box 8 and the body frame 9. The cargo box 8 is capable of being lifted into a dumping orientation and lowered into a travel orientation.

### Driving Travel Device

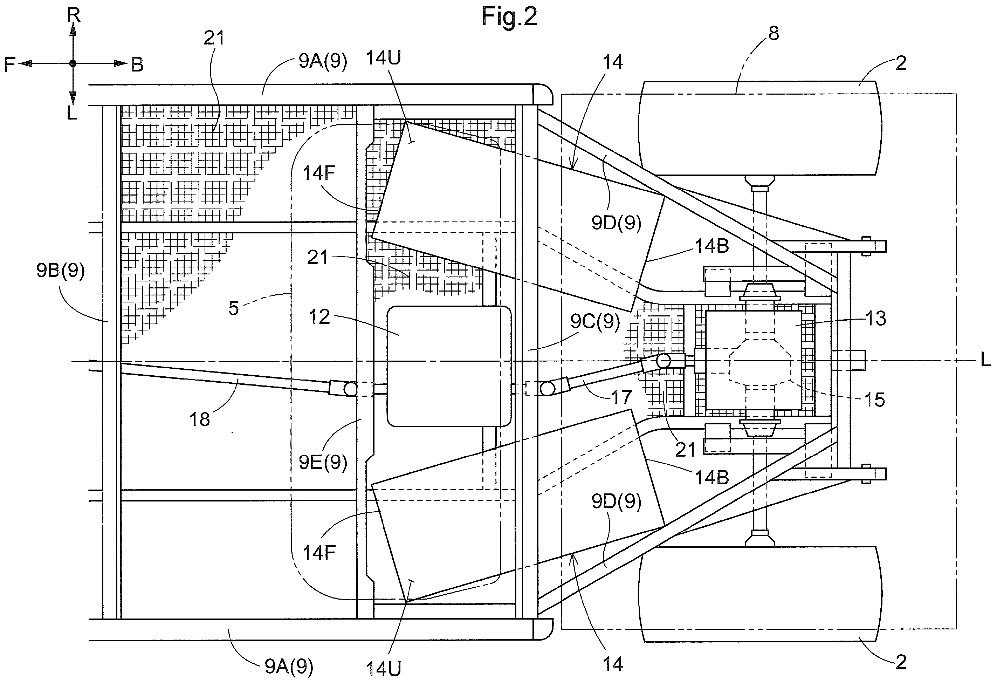

As illustrated in Figs. 1 and 2, the utility vehicle includes an electric motor 12, an inverter 13, and two batteries 14 to drive the front and rear wheels 1 and 2. The electric motor 12 may be replaced with an e-Axle further including a transmission mechanism. The inverter 13 may be included in the e-Axle.

The batteries 14 feed electric power to the inverter 13, which then converts it into alternating-current electricity. The inverter 13 supplies the alternating-current electricity to the electric motor 12 to drive the electric motor 12. The utility vehicle includes a rear-wheel differential mechanism 15 (differential gear), a front-wheel differential mechanism 16 (differential gear), a rear axle 17, and a front axle 18. The electric motor 12 transmits motive power through the rear axle 17 and the rear-wheel differential mechanism 15 to the rear wheels 2, The electric motor 12 also transmits motive power through the front axle 18 and the front-wheel differential mechanism 16 to the front wheels 1.

### Arrangement of Components

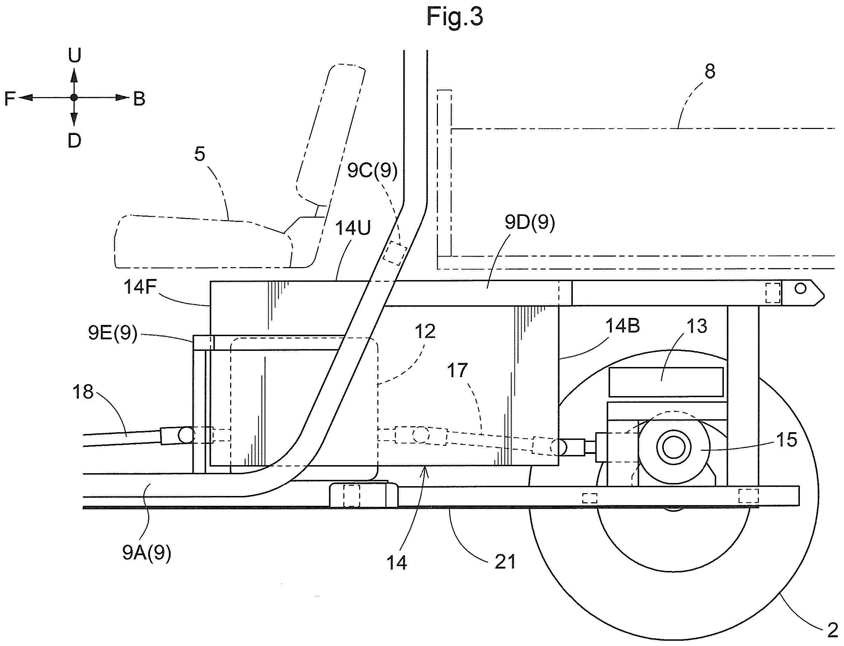

As illustrated in Figs. 1 to 3, the body frame 9 includes a pair of left and right lateral frame members 9A, a front frame member 9B, a back frame member 9C, a pair of left and right back lateral frame members 9D, and an intermediate frame member 9E relative to the driver section 4. The utility vehicle includes an underguard 21 disposed at a bottom portion of the body 3 and configured to protect the body 3 from, for example, stone and rock.

The lateral frame members 9A lie at the opposite lateral sides of the driver section 4 and extend from a front portion of the driver section 4 through a lower portion thereof to a back portion thereof. The front frame member 9B lies at the front side of the driver section 4 and extends laterally from one lateral frame member 9A to the other. The back frame member 9C lies at the back side of the driver section 4 and extends laterally from one lateral frame member 9A to the other. The back lateral frame members 9D extend from the respective lateral frame members 9A toward the back end of the body 3.

The underguard 21 has a smaller width at a back portion of the body 3 due to the rear wheels 2, which are disposed at a back portion of the body 3. This means a smaller space for components at a back portion of the body 3 than in a central area thereof. The back lateral frame members 9D accordingly extend obliquely in a plan view relative to a front-back direction L such that their respective back ends are close to each other in a plan view.

The intermediate frame member 9E extends laterally in a central area of the driver section 4 in its front-back direction. The front frame member 9B is above the back frame member 9C, which is above the back lateral frame members 9D, which is above the intermediate frame member 9E.

The electric motor 12 is below the driver's seat 5, in a laterally central area of the body 3, and above the underguard 21. The electric motor 12 has a front end within the area of the driver's seat 5 in a plan view.

The front-wheel differential mechanism 16 is between the front wheels 1 and in a laterally central area of the body 3. The rear-wheel differential mechanism 15 is between the front wheels 1, in a laterally central area of the body 3, and above the underguard 21. The inverter 13 is above the rear-wheel differential mechanism 15.

The front and rear axles 18 and 17 are in a laterally central area of the body 3 and above the underguard 21, and extend from the electric motor 12 forward and backward, respectively.

### Arrangement of Batteries

As illustrated in Figs. 1 to 3, the utility vehicle includes two identical batteries 14 arranged laterally across the electric motor 12.

Including two (or more) batteries 14 allows each battery 14 to be small-sized. This allows the batteries 14 to be positioned efficiently while constituting a battery system with a large charging capacity in total. Further, arranging the batteries 14 laterally to and across the electric motor 12 allows the electric motor 12 to be positioned appropriately and the batteries 14 to be positioned efficiently in an area where the electric motor 12 is absent.

The two batteries 14 (which are sandwiching (arranged on opposite sides of ) the electric motor 12) each preferably have a rectangular parallelepiped outer shape. The batteries 14 may each be in the form of a general-purpose battery, which typically has a rectangular parallelepiped shape.

The two batteries 14 (which are arranged on opposite sides of the electric motor 12) each extend backward from a position lateral to the electric motor 12. The batteries 14, in other words, each have a back end portion (that is, a back end face 14B) backward of a back end portion of the electric motor 12. Such long batteries 14 each have a large charging capacity.

The two batteries 14 (which are arranged on opposite sides of the electric motor 12) are arranged laterally across the rear axle 17. The rear axle 17 extends backward from the electric motor 12 (which is in a laterally central area of the body 3) through a laterally central area of the body 3. Arranging the batteries 14 laterally to and across the rear axle 17 allows the rear axle 17 to be positioned appropriately and the batteries 14 to be positioned efficiently in an area where the rear axle 17 is absent.

The two batteries 14 (which are arranged on opposite sides of the electric motor 12) are symmetrical to each other with respect to the front-back direction L, in which the body 3 travels. This allows the batteries 14 to be laterally well-balanced, and thereby keeps the weight balance of the body 3 appropriately.

The two batteries 14 (which are arranged on opposite sides of the electric motor 12) lie obliquely relative to the front-back direction L of the body 3 in a plan view. The batteries 14 are, in other words, positioned obliquely in accordance with where the electric motor 12 is positioned and where the batteries 14 are placeable in the body 3. The batteries 14, for instance, lie obliquely such that their respective front portions are far from each other with the electric motor 12 in-between and that their respective portions further backward relative to the body 3 are closer to each other. The batteries 14 preferably lie obliquely as follows: In a front view, their respective front end portions (that is, the respective front end faces 14F) are laterally apart from the electric motor 12, while their respective back end portions (that is, the respective back end faces 14B) at least overlap with the electric motor 12.

Orienting the batteries 14 obliquely allows the electric motor 12 and other components to be positioned appropriately, regardless of where the electric motor 12 is positioned and where the batteries 14 are placeable. It also eliminates the need for specially shaped batteries, and allows general-purpose batteries 14 with a large front-back dimension and a large charging capacity to be positioned efficiently in an area of the body 3 in which area the electric motor 12 and other components are absent. Orienting the batteries 14 such that their respective portions backward relative to the body 3 are close to each other allows the batteries 14 to be positioned efficiently in an open space available for a component (that is, the batteries 14) in the body 3 in particular such that the batteries 14 extend to an area backward relative to the body 3 in which area the rear wheels 2 and other components are disposed.

Specifically, the electric motor 12 has a front end within the area of the driver's seat 5 in a plan view. The electric motor 12 is also entirely within the area of the two batteries 14 (which are arranged on opposite sides of the electric motor 12) in a side view. In other words, the batteries 14 are disposed such that the electric motor 12 includes a front end portion backward of the respective front end portions of the batteries 14 (that is, the respective front end faces 14F) and a back end portion forward of the respective back end portions of the batteries 14 (that is, the respective back end faces 14B). The batteries 14 are also disposed such that the electric motor 12 includes an upper end portion below the respective upper end portions of the batteries 14 (that is, the respective upper end faces 14U).

The two batteries 14 (which are arranged on opposite sides of the electric motor 12) are disposed such that their respective front end portions (that is, the respective front end faces 14F) each at least overlap with the driver's seat 5 in a plan view. The two batteries 14 (which are arranged on opposite sides of the electric motor 12) are disposed such that their respective back end portions (that is, the respective back end faces 14B) are each at least partially backward of the respective back end portions of the driver's seat 5 and the electric motor 12 in a plan view.

The two batteries 14 (which are arranged on opposite sides of the electric motor 12) are disposed such that their respective back end portions (that is, the respective back end faces 14B) each overlap the area of the rear wheels 2 in a side view.

The two batteries 14 (which are arranged on opposite sides of the electric motor 12) have at least respective back end portions below the cargo box 8.

The two batteries 14 (which are arranged on opposite sides of the electric motor 12) are disposed such that the back frame member 9C is disposed between the front end portions of the batteries 14 (that is, the respective front end faces 14F) and back end portions of the batteries 14 (that is, the respective back end faces 14B) in a plan view. The two batteries 14 (which are arranged on opposite sides of the electric motor 12) have respective upper end faces 14U below the back frame member 9C.

The two batteries 14 (which are arranged on opposite sides of the electric motor 12) may lie obliquely in a plan view relative to the front-back direction L at an angle equal to, larger than, or smaller than the angle at which the back lateral frame members 9D lie obliquely relative to the center line.

The two batteries 14 (which are arranged on opposite sides of the electric motor 12) may have respective upper end faces 14U above or below the back lateral frame members 9D. If the batteries 14 have respective upper end faces 14U below the back lateral frame members 9D, the batteries 14 may overlap with the respective back lateral frame members 9D in a plan view.

The two batteries 14 (which are arranged on opposite sides of the electric motor 12) are inward of the respective outermost end portions of the lateral frame members 9A in a front view.

### Alternative Embodiments

(1) The batteries 14, which are arranged on opposite sides of the electric motor 12, are not necessarily symmetrical to each other, and may be oriented in any manner.

The batteries 14, which are arranged on opposite sides of the electric motor 12, lie obliquely relative to the front-back direction L preferably but not necessarily at an equal angle. Further, the batteries 14, which are arranged on opposite sides of the electric motor 12, do not necessarily both lie obliquely: At least one of the batteries 14 may lie not obliquely.

The batteries 14, which are arranged on opposite sides of the electric motor 12, may lie obliquely such that their respective portions further backward relative to the body 3 are closer to or farther from each other.

(2) The utility vehicle not necessarily includes two batteries 14, and may alternatively include three or more batteries 14 to constitute a battery system. In this case, at least two of those batteries 14 are arranged on opposite sides of the electric motor 12.

(3) The two batteries 14 (which are arranged on opposite sides of the electric motor 12) are not necessarily of an identical model, and may alternatively be of different models. The batteries 14 are, however, preferably of an identical model if they are arranged to be symmetrical to each other.

(4) The electric motor 12 may have a front end portion within the area of, forward of, or backward of the driver's seat 5 in a plan view. The electric motor 12 may have any position relative to the driver's seat 5.

(5) The batteries 14, which are arranged on opposite sides of the electric motor 12, may have respective back end portions (that is, the back end faces 14B) backward of a back end portion of the electric motor 12. The batteries 14 may have respective back end portions (that is, the back end faces 14B) not backward of a back end portion of the electric motor 12 if the electric motor 12 is large in the front-back direction or if the batteries 14 ensure a sufficient charging capacity (that is, if the batteries 14 may be short).

(6) The batteries 14, which are arranged on opposite sides of the electric motor 12, may have respective front end portions (that is, the front end faces 14F) lateral to the electric motor 12 and backward of a front end portion of the electric motor 12 in a plan view. The batteries 14 may alternatively have respective front end portions (that is, the front end faces 14F) protruding forward from a front end portion of the electric motor 12. In this case, the front axle 18 is between the batteries 14. Arranging the batteries 14 laterally to and across the front axle 18 allows the front axle 18 to be positioned appropriately and the batteries 14 to be positioned efficiently in an area where the front axle 18 is absent.

(7) The batteries 14 may have respective back end portions (that is, the back end faces 14B) within the area of, forward of, or backward of the rear wheels 2 in a side view.

(8) The batteries 14, which are arranged on opposite sides of the electric motor 12, are not necessarily below the cargo box 8, and may alternatively be forward of the cargo box 8 in a plan view. The batteries 14 may have any position relative to the cargo box 8.

(9) The batteries 14, which are arranged on opposite sides of the electric motor 12, may be below the back frame member 9C (that is, in a space including a space directly below the back frame member 9C), and may alternatively be forward or backward of the back frame member 9C in a plan view.

(10) The batteries 14 may be arranged laterally relative to the body 3 not across the electric motor 12 or lie obliquely relative to the front-back direction L of the body 3 not across the electric motor 12.

(11) The batteries 14, which are arranged on opposite sides of the electric motor 12, may each have a rectangular parallelepiped outer shape or any other outer shape.

(12) The utility vehicle as each of the embodiments above is not necessarily an electric vehicle configured to travel with use of the electric motor 12 alone, and may alternatively be a hybrid electric vehicle configured to travel with use of the electric motor 12 and an engine.

(13) The electric vehicle as each of the embodiments above of the present invention is not necessarily a utility vehicle, and may alternatively be a work vehicle provided with an implement for agricultural or other work and configured to perform various types of work while traveling.

### Industrial Applicability

The present invention is applicable to any of various electric vehicles configured to travel with use of an electric motor.

### Reference Signs List

- 1: Front wheel
- 2: Rear wheel
- 3: Body
- 5: Driver's seat
- 12: Electric motor
- 14: Battery
- 17: Rear axle
- 18: Front axle

## Claims

1. An electric vehicle, comprising:
a body (3);
an electric motor (12);
a front wheel (1) and a rear wheel (2) each drivable by motive power from the electric motor; and
a plurality of batteries each configured to feed electric power to the electric motor,
the plurality of batteries including at least two batteries (14) arranged side by side in the left-right direction with the electric motor (12) in between, the at least two batteries (14) each having a rectangular parallelepiped outer shape,
**characterized in that** the at least two batteries (14) are oblique such that respective portions further backward relative to the body (3) are closer to each other,
**in that**, in a front view, the at least two batteries (14) have respective front end portions (14F) apart from the electric motor (12) and respective back end portions (14B) overlapping with the electric motor,
**in that** the at least two batteries (14) have respective back end portions (14B) overlapping with the rear wheel in a side view.

2. The electric vehicle according to claim 1, wherein
the at least two batteries (14) are symmetrical to each other with respect to a direction in which the electric vehicle travels.

3. The electric vehicle according to claim 2, wherein
the at least two batteries (14) are of an identical model.

4. The electric vehicle according to any one of claims 1 to 3, further comprising:
a front axle (18) extending forward from the electric motor (12) and configured to transmit the motive power from the electric motor to the front wheel (1); and
a rear axle (17) extending backward from the electric motor and configured to transmit the motive power from the electric motor to the rear wheel (2),
wherein at least either the front axle or the rear axle is between the at least two batteries (14).

5. The electric vehicle according to any one of claims 1 to 4, wherein
the electric motor (12) is within an area of the at least two batteries (14) in a side view.

6. The electric vehicle according to any one of claims 1 to 5, further comprising:
a driver's seat (5) for an occupant to sit on,
wherein the at least two batteries (14) have respective back end portions (14B) backward of a back end portion of the driver's seat in a plan view.

## Patentansprüche

1. Elektrofahrzeug, umfassend:
einen Körper (3);
einen Elektromotor (12);
ein Vorderrad (1) und ein Hinterrad (2), die jeweils durch Antriebskraft von dem Elektromotor antreibbar sind; und
eine Vielzahl von Batterien, die jeweils konfiguriert sind, um den Elektromotor mit elektrischer Energie zu versorgen, wobei die Vielzahl von Batterien mindestens zwei Batterien (14) beinhaltet, die in einer Richtung linksrechts nebeneinander mit dem Elektromotor (12) dazwischen angeordnet sind, wobei die mindestens zwei Batterien (14) jeweils eine quaderförmige äußere Form aufweisen,
**dadurch gekennzeichnet, dass** die mindestens zwei Batterien (14) schräg sind, sodass jeweilige Abschnitte, die in Bezug auf den Körper (3) weiter hinten liegen, näher zueinander sind,
dass die mindestens zwei Batterien (14) in einer Vorderansicht jeweilige vordere Endabschnitte (14F), die von dem Elektromotor (12) beabstandet sind, und jeweilige hintere Endabschnitte (14B), die mit dem Elektromotor überlappen, aufweisen,
dass die mindestens zwei Batterien (14) jeweilige hintere Endabschnitte (14B) aufweisen, die in einer Seitenansicht mit dem Hinterrad überlappen.

2. Elektrofahrzeug nach Anspruch 1, wobei
die mindestens zwei Batterien (14) in Bezug auf eine Richtung, in der das Elektrofahrzeug fährt, zueinander symmetrisch sind.

3. Elektrofahrzeug nach Anspruch 2, wobei die mindestens zwei Batterien (14) von einem identischen Modell sind.

4. Elektrofahrzeug nach einem der Ansprüche 1 bis 3, ferner umfassend:
eine Vorderachse (18), die sich von dem Elektromotor (12) nach vorn erstreckt und konfiguriert ist, um die Antriebskraft von dem Elektromotor auf das Vorderrad (1) zu übertragen; und
eine Hinterachse (17), die sich von dem Elektromotor nach hinten erstreckt und konfiguriert ist, um die Antriebskraft von dem Elektromotor auf das Hinterrad (2) zu übertragen,
wobei zumindest entweder die Vorderachse oder die Hinterachse zwischen den mindestens zwei Batterien (14) ist.

5. Elektrofahrzeug nach einem der Ansprüche 1 bis 4, wobei
der Elektromotor (12) in einer Seitenansicht innerhalb eines Bereichs der mindestens zwei Batterien (14) ist.

6. Elektrofahrzeug nach einem der Ansprüche 1 bis 5, ferner umfassend:
einen Fahrersitz (5), damit ein Insasse darauf sitzt,
wobei die mindestens zwei Batterien (14) jeweilige hintere Endabschnitte (14B) aufweisen, die in einer Draufsicht hinter einem hinteren Endabschnitt des Fahrersitzes sind.

## Revendications

1. Véhicule électrique, comprenant :
un châssis (3) ;
un moteur électrique (12) ;
une roue avant (1) et une roue arrière (2) qui peuvent chacune être entraînées par la puissance motrice qui provient du moteur électrique ; et
une pluralité de batteries chacune configurée pour fournir de l'énergie électrique au moteur électrique,
la pluralité de batteries comprenant au moins deux batteries (14) disposées côte à côte dans la direction gauche-droite avec le moteur électrique (12) situé entre elles, les au moins deux batteries (14) ayant chacune une forme externe de parallélépipède rectangle,
**caractérisé en ce que** les au moins deux batteries (14) sont inclinées de sorte que leurs parties respectives situées plus en arrière par rapport au châssis (3) soient plus proches les unes des autres,
**en ce que**, sur une vue de face, les au moins deux batteries (14) présentent des parties d'extrémité avant respectives (14F) espacées du moteur électrique (12) et des parties d'extrémité arrière respectives (14B) qui chevauchent le moteur électrique,
**en ce que** les au moins deux batteries (14) présentent des parties d'extrémité arrière respectives (14B) qui chevauchent la roue arrière sur une vue latérale.

2. Véhicule électrique selon la revendication 1, dans lequel
les au moins deux batteries (14) sont symétriques l'une à l'autre par rapport à une direction dans laquelle le véhicule électrique se déplace.

3. Véhicule électrique selon la revendication 2, dans lequel
les au moins deux batteries (14) sont d'un modèle identique.

4. Véhicule électrique selon l'une quelconque des revendications 1 à 3, comprenant en outre :
un essieu avant (18) qui s'étend vers l'avant depuis le moteur électrique (12) et qui est configuré pour transmettre la puissance motrice qui provient du moteur électrique à la roue avant (1) ; et
un essieu arrière (17) qui s'étend vers l'arrière depuis le moteur électrique et qui est configuré pour transmettre la puissance motrice qui provient du moteur électrique à la roue arrière (2),
dans lequel au moins soit l'essieu avant, soit l'essieu arrière se trouve entre les au moins deux batteries (14).

5. Véhicule électrique selon l'une quelconque des revendications 1 à 4, dans lequel
le moteur électrique (12) se trouve dans une zone des au moins deux batteries (14) sur une vue latérale.

6. Véhicule électrique selon l'une quelconque des revendications 1 à 5, comprenant en outre :
un siège conducteur (5) sur lequel un occupant peut s'asseoir,
dans lequel les au moins deux batteries (14) présentent des parties d'extrémité arrière respectives (14B) situées en arrière d'une partie d'extrémité arrière du siège conducteur sur une vue de dessus.
